# EUROPEAN PATENT SPECIFICATION

(11) **EP 2 333 989 B1**
(45) Date of publication and mention of the grant of the patent: **03.07.2013**
(21) Application number: 09178933.9
(22) Date of filing: 11.12.2009
(51) Int. Cl.: H04B 10/077, H04B 10/272, H04L 12/28, H04Q 11/00

(54) **Activation of monitoring units in a passive optical network**
Aktivierung von Überwachungseinheiten in einem passiven optischen Netzwerk
Activation d'unités de surveillance dans un réseau optique passif

(43) Date of publication of application: 15.06.2011
(73) Proprietor: Alcatel Lucent, 75007 Paris (FR)
(72) Inventor: Schmuck, Harald, 71701, Schwieberdingen (DE); Straub, Michael, 75433, Maulbronn (DE); Hehmann, Jörg, 71263, Weil der Stadt (DE)
(74) Representative: Wetzel, Emmanuelle

(56) References cited:
- EP-A1- 2 086 133
- EP-A1- 2 104 250
- WO-A1-2006/023015
- M. RÖGER ET AL.: "Optically powered fiber networks" OPTICS EXPRESS, vol. 16, no. 26, 22 December 2008 (2008-12-22), pages 21821-21834, XP002580569
- WOLFGANG FREUDE ET AL: "An optically powered fibre network for heterogeneous subscribers" TRANSPARENT OPTICAL NETWORKS, 2009. ICTON '09. 11TH INTERNATIONAL CONFERENCE ON, IEEE, PISCATAWAY, NJ, USA, 28 June 2009 (2009-06-28), pages 1-4, XP031498653 ISBN: 978-1-4244-4825-8
- SHING-WA WONG ET AL: "Sleep Mode for Energy Saving PONs: Advantages and Drawbacks" GLOBECOM WORKSHOPS, 2009 IEEE, IEEE, PISCATAWAY, NJ, USA, 30 November 2009 (2009-11-30), pages 1-6, XP031585758 ISBN: 978-1-4244-5626-0

## Description

### Field of the Invention

The invention relates to the field of telecommunications, and, more specifically, to monitoring techniques for a passive optical network, PON.

### Background

This section introduces aspects that may be helpful in facilitating a better understanding of the invention. Accordingly, the statements of this section are to be read in this light and are not to be understood as admissions about what is in the prior art or what is not in the prior art.

In order to improve the quality of service of optical networks, in particular passive optical networks (PONs) with a tree-like structure, continuous monitoring techniques for detecting and localizing faults are of special interest, as they are expected to provide substantial cost savings to telecommunications companies operating these networks.

However, due to the large distances which are covered by the fiber links of a PON, a network operator usually only has access to the network from the main line, in particular from a central office, CO, which is located at a head end of the PON. For checking the functionality of the branches of the PON from the main line, it is known to dispose monitoring units in these branches which are usually arranged close to the location of the end users.

The downstream communication between the CO and the monitoring units may be performed by the transmission of binary information including an identifier for a particular monitoring unit which may then execute a predefined function. Alternatively, broadcasting signals from the CO to all subscribers may be used. In this respect, "Optically powered fiber networks" by W. Freude, M. Röger et al., Optics Express, Vol. 16, Issue 26, pp. 21821-21834, discloses a method for performing central control of a PON with a multitude of subscribers attached to a CO in a tree-like topology by using a low-energy medium-access control protocol (LE-MAC). In a PON controlled by such a LE-MAC protocol, energy-preserving (low duty cycle) subscribers spend their idle time intervals in an energy-saving (snooze) or minimum-power (sleep) mode, simultaneously switching to an energy-costly active mode at the start of rendezvous time intervals in which the CO interrogates all those subscribers, one after the other. For this purpose, a broadcast signal is sent from the CO to all of the low duty cycle subscribers, containing a timestamp with the start time of the rendezvous time interval. During the rendezvous time interval, the subscribers spend their time in the active mode with high power consumption until the CO begins the interrogation and data transmission may be performed.

Patent document WO 2006/023015 relates to the reduction of power consumption by an optical network transmitter (ONT) in a passive optical network (PON). In particular, it discloses a hibernation mode in which power is supplied only to a watchdog circuit while the ONT powers down other circuitry to conserve power. Said watchdog circuit wakes up a subset of the deactivated circuitry at service-critical events in order to service such events.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

One aspect of the invention relates to a method for monitoring a passive optical network, PON, having a tree-like structure with a main line and a plurality of branches, a plurality of monitoring units being arranged in the plurality of branches, the method comprising: generating at least one information request comprising address information for addressing a monitoring unit and time delay information for the addressed monitoring unit, transmitting the at least one information request from the main line to the at least one addressed monitoring unit, detecting the information request in the addressed monitoring unit, and transmitting a response signal back to the main line after a delay time which is defined in the time delay information of the information request, wherein at least part of the delay time, the addressed monitoring unit is operated in a low-power operation mode.

For monitoring a PON in a reliable and energy-efficient way, a directed activation of one or more monitoring units is employed in the method according to the invention. Waking up from a minimum-energy sleeping mode in typically regular time intervals governed e.g. by an ultra-low energy consumption internal clock, a monitoring unit switches to an active mode in which it is able to receive / detect information requests from the central office, CO. The information request contains a time delay information informing the monitoring unit when to start the transmission of the response signal, thus allowing the addressed monitoring unit to switch to an energy-saving snooze mode for typically most of the delay time between the receipt of the information request and the start of the transmission of the response signal.

In a preferred variant, the method further comprises: generating the time delay information for different addressed monitoring units such that receiving times of the response signals at the main line are different from each other, the generating of the time delay information preferably taking propagation delays of the information requests and of the response signals into account. The time delays for the different monitoring units are adjusted in the CO, whereby the contribution of the propagation delays is individual for each monitoring unit and may be determined by measurement or calculation of signal propagation times within the corresponding fibers. As the fiber lengths from the CO to the monitoring units may be 20 km or more, the delay times may be considerable, being in the order of e.g. several hundreds of microseconds.

In an improvement of this variant, the method further comprises: generating the time delay information for the addressed monitoring units such that the receiving times of the response signals of different monitoring units at the main line are contained in a common detection time interval, preferably alternating with a transmission time interval for transmitting the at least one information request. In such a way, listening to the upstream signals arriving at the CO is only necessary during well-defined time slots of a constant length, leaving the rest of the time free for the transmission of information requests and other functions of the CO, such as evaluating the information contained in the response signals which have already been obtained.

In one embodiment, during a given transmission time interval, only information requests addressing specific monitoring units are transmitted, preferably in a periodic way. In this case, a transmission time interval containing periodic information requests for only a single specific monitoring unit may be followed by a corresponding detection time interval for the same monitoring unit. After that, the procedure may be repeated for the next monitoring unit. In this case, the length of the transmission time interval and/or of the detection time interval may be chosen differently for different monitoring units depending on the distance to the central office and thus of the time delay involved. Alternatively, a sequence of independent information requests, each being addressed to a specific (different) monitoring unit may be sent repeatedly during the transmission time interval. In both cases, a specific monitoring unit may switch to an energy-saving snooze mode immediately after the receipt of the information request which is addressed to this particular monitoring unit.

In another embodiment, the generation of the information request comprises generating address information for addressing at least two, preferably all monitoring units. In other words, an information request message is generated which contains address information for at least two monitoring units. Such an information request may typically not be split into independent information requests.

Advantageously, the generation of the information request comprises generating command information for selecting a type of uplink information to be transmitted in the response signals. The type of uplink information may be any sort of control parameter for monitoring the functionality of the corresponding branch of the PON, such as a received optical power or a temperature at the location of the monitoring unit etc.

A further aspect of the invention is implemented in a monitoring unit for a passive optical network having a tree-like structure with a main line and a plurality of branches, the monitoring unit comprising: a detection unit for detecting an information request being addressed to the monitoring unit, the information request comprising time delay information, a transmission unit for transmitting a response signal to the main line after a delay time which is defined in the time delay information of the information request, the monitoring unit being adapted to operate in a low-power operation mode for at least part of the delay time. Typically, the detection unit comprises an o/e-conversion element, such as a photo diode being combined with an electric amplifier, while the transmission unit employs an e/o-conversion-element, such as a laser diode, both units being governed by a central processing unit, CPU, such as a micro controller. Turning each of the energy-costly detection and transmission units off as soon as their operation is no longer needed leads to a substantial reduction of the power consumption of the monitoring unit.

In a preferred embodiment, the monitoring unit further comprises a mode switching unit for switching from the low-power operation mode to a higher-power operation mode for detecting the information request and/or for transmitting the response signal. When a battery is used for providing power to the monitoring unit, the switching to a low-power mode allows to save battery power, thus increasing the lifetime of the battery. It is understood that alternatively or in addition, part of the downstream signal which is tapped by the monitoring unit may be used to charge a rechargeable energy storage, in particular a capacitor, in the low-power operation mode, the capacitor being partially or almost entirely discharged during the transmission of the response signal in the higher-power operation mode, the optical energy serving as an (additional) power source in this case.

A further aspect of the invention is implemented in a central office, CO, for a passive optical network, PON, having a tree-like structure with a main line and at least two branches, a plurality of monitoring units being arranged in at least two of the branches, the central office comprising: a generating unit for generating information requests comprising address information for addressing the monitoring units and time delay information for the addressed monitoring units, a transmission unit for transmitting the information requests from the main line to the addressed monitoring units, and a receiving unit for receiving response signals transmitted from the monitoring units back to the central office, wherein the generating unit is adapted for generating the time delay information for different addressed monitoring units such that receiving times of the response signals in the central office are different from each other, the generation preferably taking propagation delays of the information requests and of the response signals into account. Generating the time delay information for specific monitoring units at a central location in the generating unit of the CO allows to monitor PONs with various number and/or varying priority of subscriber branches in a simple, flexible and energy-efficient way.

In a preferred variant, the generating unit is adapted for generating the time delay information for the addressed monitoring units such that the receiving times of the response signals of different monitoring units at the main line are contained in a common detection time interval, preferably alternating with a transmission time interval for transmitting the at least one information request. As already pointed out in the above description of the corresponding method, it is of advantage for the CO operation if detection time intervals for downstream signals are separated from transmission time intervals for upstream signals.

In one embodiment, the transmission unit is adapted for transmitting during a given transmission time interval only information requests addressing specific monitoring units, the transmissions being preferably performed in a periodic way. In particular when only a single monitoring unit is addressed during the transmission time interval, a particularly robust interrogation / monitoring protocol can be provided which is relatively insensitive to the variation of the delay times and is also suited to control monitoring units with a particularly high priority, since the transmission and detection time intervals may be chosen to be relatively short, such that a quick check whether a monitoring unit is still available can be performed.

In another embodiment, the generation of the information request by the generating unit comprises generating address information for addressing at least two, preferably all monitoring units. The advantage of this embodiment compared to the previously described subsequent interrogation of specific monitoring units is that it allows for a more frequent interrogation of a multitude of monitoring units, in particular of all monitoring units provided in the branches of the network.

In an advantageous embodiment, the generation of the information request comprises generating command information for selecting a type of uplink information to be transmitted in the response signals. This feature is particularly important in a heterogeneous PON, where different control parameters need to be monitored in different subscriber branches and/or less uplink information is required from users with lower priority, thus allowing to reduce the length of the response signal / message and thus to save time and energy at both the central office and the monitoring unit.

A further aspect of the invention is implemented in a passive optical network comprising: at least one monitoring unit of the type described above, and a central office of the type described above. Advantageously, the passive optical network is an operator network and the at least one monitoring unit is arranged in the operator network adjacent to a demarcation point to a user network. This allows the operator to control intact functionality of each user branch individually in a very effective way, as concerns the operator's time and energy costs.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:
- **Fig. 1**: shows a schematic diagram of an embodiment of a passive optical network according to the invention,
- **Fig. 2**: shows an embodiment of a monitoring unit according to the invention,
- **Fig. 3a,b,c**: show timing diagrams for (a) activation of a specific monitoring unit with a single information request addressing that monitoring unit, (b) activation of at least two monitoring units using a sequence of information requests, resp., (c) using a single information request addressing two or more monitoring units.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

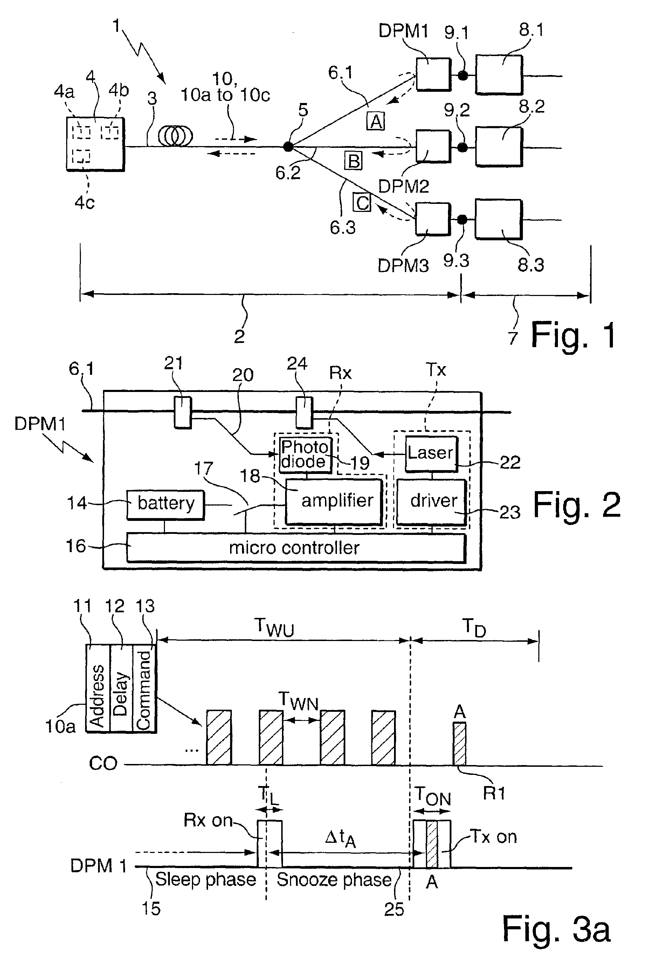

**Fig. 1** shows a passive optical network **1** which comprises a tree-like operator network **2** as a first section. The operator network 2 has a main fiber line **3** being located between a central office **4**, also referred to as Optical Line Termination (OLT), and a 1 x N passive optical distribution network (splitter) **5** connecting the main line 3 with a number N of branches, three of which (**6.1** to 6.3) are shown in Fig. 1. The branches 6.1 to 6.3 of the operator network 2 are continued in a user network **7** which constitutes a second section of the passive optical network 1 and which comprises Optical Network Terminations (ONTs) **8.1** to **8.3**, one for each of the branches 6.1 to 6.3. A so-called demarcation point **9.1** to **9.3** marks the border between the operator network 2 and the user network 7 in each of the branches 6.1 to 6.3. In the operator network 2, monitoring units **DPM1** to **DPM3** are arranged adjacent to each of the demarcation points 9.1 to 9.3, which, due to their position in the passive optical network 1, are also referred to as demarcation point monitors (DPMs) in the following. A person skilled in the art will appreciate that the PON 1 represented in Fig. 1 only shows the basic structure of a PON and that real PONs are usually much more complex.

As the operator is responsible for faults occurring in the operator network 2, e.g. due to fiber breaks, the operator has to monitor the network 1 continuously to spot possible defects. Due to large distances covered by the fiber links in the network 1, the operator generally only has access to the network 1 via the central office 4 and has to check the correct operability of the network 1 from this site all the way down to the demarcation points 9.1 to 9.3.

For monitoring the network 1, the central office 4 generates information requests **10; 10a** to **10c** which are transmitted in downstream through the branches 6.1 to 6.3 of the operator network 2 to the monitoring units DPM1 to DPM3. In response to the information requests 10; 10a to 10c, each of the monitoring units DPM1 to DPM3 generates a response signal A, B, C which is transmitted back to the main line 3, the response signal **A, B, C** containing monitoring information. For the implementation of the monitoring process, different timing schemes / protocols and possibly also different types of information requests 10; 10a to 10c may be used, a first timing scheme being described in the following with reference to **Fig. 3a****.**

A first, simple type of information request **10a** (4 byte message) is shown on the left-hand side of Fig. 3a. The information request 10a comprises address information **11** for addressing a specific monitoring unit, being the first monitoring unit DPM1 in the present example, time delay information **12** about a delay time **Δt_{A}** for the addressed monitoring unit DPM1, and command information **13** for selecting a type of uplink information to be transmitted in the response signal **A** back to the central office 4. The type of uplink information may be any sort of control parameter for monitoring the functionality of the corresponding branch of the PON, such as a received optical power or a temperature at the location of the monitoring unit DPM1 etc.

As shown in the timing diagram for the first monitoring unit DPM1, the central office (being referred to as **CO** in Figs. 3a-3c) 4 repeatedly sends identical information requests 10a being addressed to the first monitoring unit DPM1 during a transmission time interval **T**_{wu} (e.g. 1 s to 100 s long) in which the first monitoring unit DPM1 is supposed to wake up from a minimum-energy sleep mode **15** to an active mode designated by **Rx on**. If the monitoring unit DPM1 happens to wake up during the transmission time interval T_{wu}, its detection unit (not shown in Fig. 3a) is activated during a listening time interval **T_{L}**, so that it is capable to receive one of the identical information requests 10a for certain if the information requests 10a are separated by a non-transmitting time interval **T_{WN}** which is shorter than the listening time interval T_{L}. It will be understood, however, that the non-transmitting time interval T_{WN} may also be chosen equal to or greater than the listening time interval T_{L}.

Having recognized its own address in the address information 11 of the information request 10a during the active mode "Rx on", the first monitoring unit DPM1 detects the time delay information 12 and the command information 13 and switches to an energy-saving snooze mode **25** for a period which depends on (and is typically part of) the delay time Δt_{A}. Shortly before the end of the delay time Δt_{A}, the monitoring unit DPM1 switches to an active mode designated by **Tx on** for a time interval **T_{ON}** (e.g. 100 µs long) and its transmitting unit (not shown in Fig. 3a) starts transmitting the required response signal A (represented by the hatched area) to the central office CO at a time instant which typically exactly corresponds to the delay time Δt_{A} after reception/detection of the information request 10a. As can be seen from Fig. 3a, the response signal A is received at the central office CO at a receiving time **R1** after a time delay which is essentially due to the propagation delay in the branch 6.1 and the main line 3 of the PON 1. The receiving time R1 lies in a detection time interval **T_{D}** (e.g. 200 µS long) which is reserved for receiving response signals from the first monitoring unit DPM1 and which is chosen sufficiently long to allow to receive a response message A to the information request 10a sent during the transmission time interval T_{WU}.

After reception of the response signal A of the first monitoring unit DPM1, the procedure shown in Fig. 3a is repeated for the second one of the monitoring units DPM2, until all monitoring units DPM1 to DPM3 have been checked and their response signals A to C have been received. It will be understood that possibly, monitoring units considered more important may be activated more frequently than less important monitoring units.

A set-up for an exemplary monitoring unit DPM1 adapted for the timing protocol shown in Fig. 3a is displayed in **Fig. 2**. The monitoring unit DPM1 is powered by a long-life battery **14.** In order to reduce additional maintenance costs for the exchanging of the battery 14 to a minimum, the device spends its idle time in the minimum-energy sleep mode 15, or the energy-saving snooze mode 25, cf. the timing diagram of Fig. 3a, during which its central processing unit (CPU) **16,** represented as a micro controller in Fig. 2, remains disabled or runs in an energy-saving modus, respectively, and thus cannot receive information requests 10, 10a from the central office CO.

An internal low-quality clock (not shown) with an ultra-low energy consumption awakes the CPU 16 from the sleep mode 15 for the pre-defined listening time interval T_{L}, during which the monitoring unit DPM1 is able to receive the information request 10a, by closing the switch **17** that connects the battery 14 to an amplifier **18** connected to a photo diode **19**, together forming a detection unit **Rx** of the monitoring unit DPM1. The photo diode 19 is used as an o/e-conversion element and obtains part **20** of the downstream optical signal (about 5 % of the total intensity) branched by a tap coupler **21** from the branch 6.1.

After reception of the information request 10a, the CPU 16 switches from the active mode "Rx on" to the snooze mode 25, setting a high-quality precise clock (not shown) for waking up from the snooze mode 25 shortly before the delay time Δt_{A} has lapsed. Thus, shortly before the end of the delay time Δt_{A}, a transmission unit **Tx** of the monitoring unit DPM1 is activated. The transmission unit Tx comprises a laser **22**, used as an e/o-conversion element, a driver **23** and a further tap coupler **24** that feeds the response signal A into the upstream of the branch 6.1.

Alternatively or in addition to the battery 14, the monitoring unit DPM1 may be powered by an external power source or by using the power of the o/e-converted part 20 of the downstream signal during time intervals in which the detection unit Rx of the monitoring unit DPM1 is not active. In the latter case, as disclosed by DE 10 2006 045 802 A1, a rechargeable energy storage such as a capacitor may be provided in the monitoring unit DPM1.

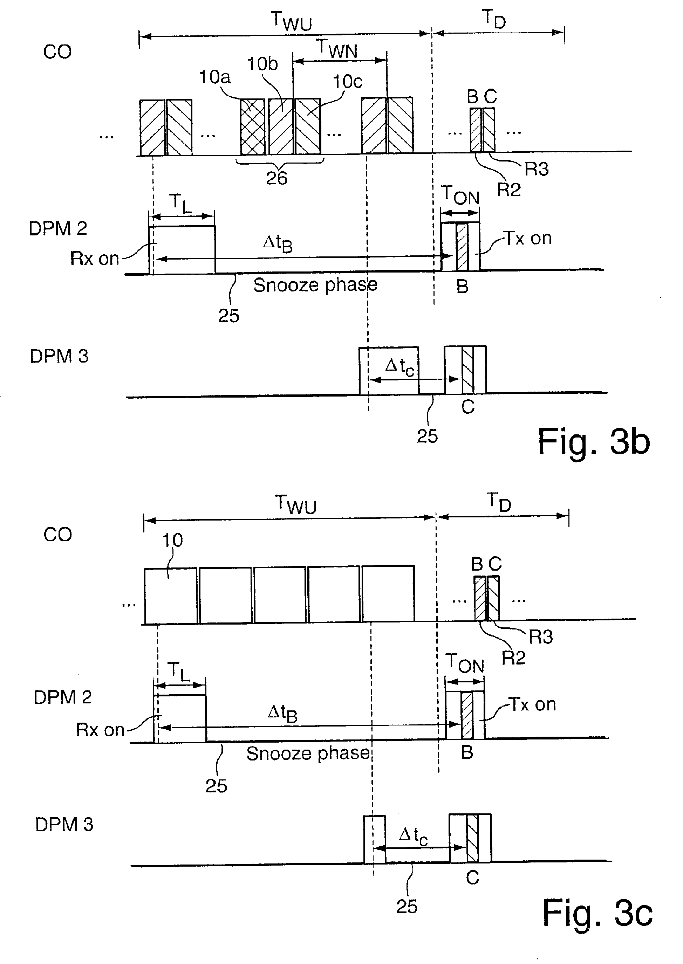

Simultaneous activation of more than one monitoring unit during the same transmission time interval **T**_{WU} is illustrated in **Fig. 3b**, representing a timing diagram for the second and third monitoring units DPM2, DPM3. The timing diagram of Fig. 3b differs from the activation of only a single monitoring unit DPM1 as illustrated in Fig. 3a only in that sequences **26** of three specific information requests 10a to 10c for addressing the first, second and third monitoring unit DPM1, DPM2, and DPM3, respectively, are being sent by the central office CO directly one after another in a periodic manner during the transmission time interval **T**_{WU}. Accordingly, the listening time interval T_{L} of the monitoring units DPM1 to DPM3 needs to be longer than the one of Fig. 3a to allow each monitoring unit DPM1 to DPM3 to detect that one of the information requests 10a to 10c being addressed to it.

Having received the information message 10b, the second monitoring unit DPM2 immediately switches to the snooze mode 25 to save energy, waking up again shortly before the end of a delay time **Δt**_{B} defined in the time delay information 12 of the corresponding information request 10b, and sending its response signal B at the end of the delay time Δt_{B}, being received at a second receiving time **R2** in the central office CO. In a similar way, the third monitoring unit DPM3 sends its response signal C after a corresponding delay time **Δt**_{c} has lapsed, the corresponding response signal C being received at a third receiving time **R3** in the central office CO in a common detection time interval **T** _{D} of the central office CO which follows upon its transmission time interval **T** _{WU}, The reception times R1 to R3 of the specific response signals A, B, C from the different monitoring units DPM1 to DPM3 are different from each other, i.e. are arranged without time overlap by means of exact definition of the delay times Δt_{A} to Δt_{c} in the time delay information 12 contained in the respective information requests 10a to 10c.

It is understood that, in general, different propagation delays of the information requests 10a to 10c and of the response signals A, B, C are caused by different lengths of the branches 6.1 to 6.3 connecting the monitoring units DPM1 to DPM3 to the main line 3. Consequently, those signal propagation delays have to be taken into account for generating the desired time delays Δt_{A} to Δt_{c} contained in the information requests 10a to 10c which may be done by performing measurements / using measurement information about the signal propagation times within the fibers of the PON 1.

Finally, simultaneous activation of all the monitoring units DPM1 to DPM3 during the transmission time interval **T**_{WU} by a broadcast signal is illustrated in **Fig. 3c****.** The timing scheme of Fig. 3c differs from the aforementioned activation types in that a single information request 10 (broadcast signal) contains address, time delay and command information 11, 12, 13, for all the monitoring units DPM1 to DPM3. As the information request 10 may typically only be received as a whole by each monitoring unit DPM1 to DPM3, the listening time interval **T**_{L} of each monitoring unit DPM1 to DPM3 has to be adapted and may, in this case, typically not be shorter than the time interval which is spanned by the information request 10. As in the case with Fig. 3b, the information request 10 is repeatedly sent during the transmission time interval **T**_{wu} with only small idle times between two consecutive transmissions.

It will be understood that the central office 4 of Fig. 1 is also adapted for performing the monitoring process, and for this purpose comprises a generating unit **4a** for generating the information requests 10; 10a to 10c, a transmission unit **4b** for transmitting the information requests 10; 10a to 10c, and a receiving unit **4c** for receiving the response signals A to C. The generating unit 4a is adapted for generating the time delay information 12 contained in the information requests 10a to 10c for the different addressed monitoring units DPM1 to DPM3 such that the receiving times R1 to R3 of their response signals A, B, C in the central office 4 are different from each other, the generation typically taking propagation delays of the information requests 10, 10a to 10c and of the response signals A, B, C into account. This is possible as the central office 4 typically has all the required information e.g. through measurements or through information which is provided during the set-up of the PON 1.

In summary, in the way described above, an energy-efficient wake-up procedure for activating monitoring units during a monitoring process of a passive optical network can be achieved.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The scope of the present invention is defined by the appended claims.

## Claims

1. Method for monitoring a passive optical network (1) having a tree-like structure with a main line (3) and a plurality of branches (6.1 to 6.3), a plurality of monitoring units (DPM1 to DPM3) being arranged in the plurality of branches (6.1 to 6.3), the method comprising:
generating at least one information request (10, 10a to 10c) comprising address information (11) for addressing a monitoring unit (DPM1 to DPM3) and time delay information (12) for the addressed monitoring unit (DPM1 to DPM3),
repeatedly transmitting the at least one information request (10) from the main line (3) to the at least one addressed monitoring unit (DPM1 to DPM3) during a transmission time interval (T_{WU}) in which the at least one monitoring unit (DPM1 to DPM3) is supposed to wake up from a low-power operation mode (15),
detecting the information request (10, 10a to 10c) in the addressed monitoring unit (DPM1 to DPM3) during a listening time interval (T_{L}) in which the addressed monitoring unit (DPM1 to DPM3) is in a higher-power operation mode (Rx on), the listening time interval (T_{L}) being part of the transmission time interval (T_{WU}), and transmitting a response signal (A, B, C) back to the main line (3) after a delay time (Δt_{A} to Δt_{c}) which is defined in the time delay information (12) of the information request (10, 10a to 10c),
wherein at least part of the delay time (Δt_{A} to Δt_{c}), the addressed monitoring unit (DPM1 to DPM3) is operated in a low-power operation mode (25).

2. Method according to claim 1, further comprising: generating the time delay information (12) for different addressed monitoring units (DPM1 to DPM3) such that receiving times (R1 to R3) of the response signals (A, B, C) at the main line (3) are different from each other, the generating of the time delay information (12) preferably taking propagation delays of the information requests (10, 10a to 10c) and of the response signals (A, B, C) into account.

3. Method according to claim 1 or 2, further comprising: generating the time delay information (12) for the addressed monitoring units (DPM1 to DPM3) such that the receiving times (R1 to R3) of the response signals (A, B, C) of different monitoring units (DPM1 to DPM3) at the main line (3) are contained in a common detection time interval (T_{D}), preferably alternating with a transmission time interval (T_{WU}) for transmitting the at least one information request (10, 10a to 10c).

4. Method according to claim 3, wherein during a given transmission time interval (T_{WU}), only information requests (10a to 10c) addressing specific monitoring units (DPM1 to DPM3) are transmitted, preferably in a periodic way.

5. Method according to any one of the preceding claims, wherein the generation of the information request (10) comprises generating address information (12) for addressing at least two, preferably all monitoring units (DPM1 to DPM3).

6. Method according to any one of the preceding claims, wherein the generation of the information request (10, 10a to 10c) comprises generating command information (13) for selecting a type of uplink information to be transmitted in the response signals (A, B, C).

7. Monitoring unit (DPM1) for a passive optical network having a tree-like structure with a main line (3) and a plurality of branches (6.1 to 6.3), the monitoring unit (DPM1) comprising:
a detection unit (Rx) for detecting an information request (10a) repeatedly transmitted during a transmission time interval (T_{WU}) in which the monitoring unit (DPM1 to DPM3) is supposed to wake up from a low-power operation mode (15), the information request (10a) being addressed to the monitoring unit (DPM1) and comprising time delay information (12),
a transmission unit (Tx) for transmitting a response signal (A) to the main line (3) after a delay time (Δt_{A}) which is defined in the time delay information (12) of the information request (10a),
the monitoring unit (DPM1) being adapted to operate in a low-power operation mode (25) for at least part of the delay time (Δt_{A}), the monitoring unit (DPM1) further comprising an internal low-quality clock adapted to awake the monitoring unit (DPM1) from a low-power operation mode (15) for a listening time interval (T_{L}), the listening time interval (T_{L}) being part of the transmission time interval (T_{WU}).

8. Monitoring unit according to claim 7, further comprising a mode switching unit (16, 17) for switching from the low-power operation mode (15, 25) to a higher-power operation mode (Rx on, Tx on) for detecting the information request (10; 10a to 10c) and/or for transmitting the response signal (A).

9. Central office (4) for a passive optical network (1) having a tree-like structure with a main line (3) and at least two branches (6.1 to 6.3), a plurality of monitoring units (DPM1 to DPM3) being arranged in at least two of the branches (6.1 to 6.3),
the central office (4) comprising:
a generating unit (4a) for generating information requests (10, 10a to 10c) comprising address information (11) for addressing the monitoring units (DPM1 to DPM3) and time delay information (12) for the addressed monitoring units (DPM1 to DPM3),
a transmission unit (4b) for repeatedly transmitting the information requests (10, 10a to 10c) from the main line (3) to the addressed monitoring units (DPM1 to DPM3)) during a transmission time interval (T_{WU}) in which the at least one addressed monitoring unit (DPM1 to DPM3) is supposed to wake up from a low-power operation mode (15), and
a receiving unit (4c) for receiving response signals (A, B, C) transmitted from the monitoring units (DPM1 to DPM3) back to the central office (4), wherein
the generating unit (4a) is adapted for generating the time delay information (12) for different addressed monitoring units (DPM1 to DPM3) such that receiving times (R1 to R3) of the response signals (A, B, C) in the central office (4) are different from each other, the generation preferably taking propagation delays of the information requests (10, 10a to 10c) and of the response signals (A, B, C) into account.

10. Central office (4) according to claim 9, wherein the generating unit (4a) is adapted for generating the time delay information (12) for the addressed monitoring units (DPM1 to DPM3) such that the receiving times (R1 to R3) of the response signals (A, B, C) of different monitoring units (DPM1 to DPM3) at the main line (3) are contained in a common detection time interval (T_{D}), preferably alternating with a transmission time interval (T_{WU}) for transmitting the at least one information request (10, 10a to 10c).

11. Central office (4) according to claim 10, wherein the transmission unit (4b) is adapted for transmitting during a given transmission time interval (T_{WU}) only information requests (10a to 10c) addressing specific monitoring units (DPM1 to DPM3), the transmissions being preferably performed in a periodic way.

12. Central office (4) according to claim 10, wherein the generation of the information request (10) comprises generating address information (11) for addressing at least two, preferably all monitoring units (DPM1 to DPM3).

13. Central office (4) according to any one of claims 10 to 12, wherein the generation of the information request (10, 10a to 10c) comprises generating command information (13) for selecting a type of uplink information to be transmitted in the response signals (A, B, C).

14. Passive optical network (1) comprising:
at least one monitoring unit (DPM1 to DPM3) according to any one of claims 7 or 8, and
a central office (4) according to any one of claims 9 to 13.

15. Passive optical network (1) according to claim 14, wherein the passive optical network (1) comprises an operator network (2) and the at least one monitoring unit (DPM1 to DPM3) is arranged in the operator network (2) adjacent to a demarcation point (9.1 to 9.3) to a user network (7).

## Patentansprüche

1. Verfahren zur Überwachung eines passiven optischen Netzwerks (1), welches eine baumartige Struktur mit einer Hauptleitung (3) und einer Vielzahl von Nebenleitungen (6.1 bis 6.3) aufweist, wobei eine Vielzahl von Überwachungseinheiten (DPM1 bis DPM3) in der Vielzahl von Nebenleitungen (6.1 bis 6.3) angeordnet sind, wobei das Verfahren umfasst:
Erzeugen mindestens einer Informationsanforderung (10, 10a bis 10c) mit Adressinformationen (11) zur Adressierung einer Überwachungseinheit (DPM1 bis DPM3) und Zeitverzögerungsinformationen (12) für die adressierte Überwachungseinheit (DPM1 bis DPM3),
wiederholtes Übertragen der mindestens einen Informationsanforderung (10) von der Hauptleitung (3) an die mindestens eine adressierte Überwachungseinheit (DPM1 bis DPM3) während eines Übertragungszeitintervalls (T_{WU}), in welchem die mindestens eine Überwachungseinheit (DPM1 bis DPM3) aus einem Betriebsmodus mit niedriger Leistungsaufnahme (15) aufwachen soll,
Erkennen der Informationsanforderung (10, 10a bis 10c) in der adressierten Überwachungseinheit (DPM1 bis DPM3) während eines Abhörzeitintervalls (T_{L}), in welchem sich die adressierte Überwachungseinheit (DPM1 bis DPM3) in einem Betriebsmodus mit höherer Leistungsaufnahme (Rx on) befindet, wobei das Abhörzeitintervall (T_{L}) Teil des Übertragungszeitintervalls (T_{WU}) ist, und Zurücksenden eines Antwortsignals (A, B, C) an die Hauptleitung (3) nach Ablauf einer Verzögerungszeit (Δt_{A} bis Δt_{C}), welche in der Zeitverzögerungsinformation (12) der Informationsanforderung (10, 10a bis 10c) definiert ist,
wobei mindestens während eines Teils der Verzögerungszeit (Δt_{A} bis Δt_{C}) die adressierte Überwachungseinheit (DPM1 bis DPM3) in einem Betriebsmodus mit niedriger Leistungsaufnahme (25) betrieben wird.

2. Verfahren nach Anspruch 1 , weiterhin umfassend: Erzeugen der Zeitverzögerungsinformationen (12) für unterschiedliche adressierte Überwachungseinheiten (DPM1 bis DPM3), so dass sich die Empfangszeiten (R1 bis R3) der Antwortsignale (A, B, C) an der Hauptleitung (3) voneinander unterscheiden, wobei das Erzeugen der Zeitverzögerungsinformation (12) vorzugsweise Laufzeitverzögerungen der Informationsanforderungen (10, 10a bis 10c) und der Antwortsignale (A, B, C) berücksichtigt.

3. Verfahren nach Anspruch 1 oder 2, weiterhin umfassend: Erzeugen der Zeitverzögerungsinformationen (12) für die adressierten Überwachungseinheiten (DPM1 bis DPM3), so dass die Empfangszeiten (R1 bis R3) der Antwortsignale (A, B, C) von unterschiedlichen Überwachungseinheiten (DPM1 bis DPM3) an der Hauptleitung (3) in einem gemeinsamen Detektionszeitintervall (T_{D}) begriffen sind, vorzugsweise alternierend mit einem Übertragungszeitintervall (T_{WU}) für die Übertragung der mindestens einen Informationsanforderung (10, 10a bis 10c).

4. Verfahren nach Anspruch 3, wobei während eines gegebenen Übertragungszeitintervalls (T_{WU}) nur Informationsanforderungen (10a bis 10c), welche spezifische Überwachungseinheiten (DPM1 bis DPM3) adressieren, übertragen werden, vorzugsweise periodisch.

5. Verfahren nach einem beliebigen der vorstehenden Ansprüche, wobei das Erzeugen der Informationsanforderung (10) das Erzeugen von Adressinformationen (12) zum Adressieren von mindestens zwei, vorzugsweise allen Überwachungseinheiten (DPM1 bis DPM3) umfasst.

6. Verfahren nach einem beliebigen der vorstehenden Ansprüche, wobei das Erzeugen der Informationsanforderung (10, 10a bis 10c) das Erzeugen von Befehlsinformationen (13) für das Auswählen eines Typs der in den Antwortsignalen (A, B, C) zu übertragenden Uplink-Informationen umfasst.

7. Überwachungseinheit (DPM1) für ein passives optisches Netzwerk, welches eine baumartige Struktur mit einer Hauptleitung (3) und einer Vielzahl von Nebenleitungen (6.1 bis 6.3) aufweist, die Überwachungseinheit (DPM1) umfasst:
Eine Detektionseinheit (Rx) zur Detektion einer Informationsanforderung (10a), welche wiederholt während eines Übertragungszeitintervalls (T_{WU}), in welchem die Überwachungseinheit (DPM1 bis DPM3) aus einem Betriebsmodus mit niedriger Leistungsaufnahme (15) aufwachen soll, übertragen wird, wobei die Informationsanforderung an die Überwachungseinheit (DPM1) übertragen wird und eine Zeitverzögerungsinformation (12) enthält,
eine Übertragungseinheit (Tx) zum Übertragen eines Antwortsignals (A) an die Hauptleitung (3) nach Ablauf einer Verzögerungszeit (Δt_{A}), welche in der Zeitverzögerungsinformation (12) der Informationsanforderung (10a) definiert ist,
wobei die Überwachungseinheit (DPM1) für den Betrieb in einem Betriebsmodus mit niedriger Leistungsaufnahme (25) für mindestens einen Teil der Verzögerungszeit (Δt_{A}) ausgelegt ist, wobei die Überwachungseinheit (DPM1) weiterhin einen internen niederqualitativen Taktgeber umfasst, welcher für das Aufwecken der Überwachungseinheit (DPM1) aus einem Betriebsmodus mit niedriger Leistungsaufnahme (15) für ein Abörzeitintervall (TL) ausgelegt ist, wobei das Abhörzeitintervall (T_{L}) Teil des Übertragungszeitinvertalls (T_{WU}) ist.

8. Überwachungseinheit nach Anspruch 7, weiterhin umfassend eine Modusumschalteinheit (16, 17) zum Umschalten von dem Betriebsmodus mit niedriger Leistungsaufnahme (15, 25) in einen Betriebsmodus mit höherer Leistungsaufnahme (Rx on, Tx on), um die Informationsanforderung (10; 10a bis 10c) zu erkennen und/oder das Antwortsignal (A) zu übertragen.

9. Vermittlungsstelle (4) für ein passives optisches Netzwerk (1), welches eine baumartige Struktur mit einer Hauptleitung (3) und mindestens zwei Nebenleitungen (6.1 bis 6.3) aufweist, wobei eine Vielzahl von Überwachungseinheiten (DPM1 bis DPM3) in mindestens zwei der Nebenleitungen (6.1 bis 6.3) angeordnet sind,
wobei die Vermittlungsstelle (4) umfasst:
Eine Erzeugungseinheit (4a) zum Erzeugen von Informationsanforderungen (10, 10a bis 10c) mit Adressinformationen (11) zur Adressierung der Überwachungseinheiten (DPM1 bis DPM3) und Zeitverzögerungsinformationen (12) für die adressierten Überwachungseinheiten (DPM1 bis DPM3),
eine Übertragungseinheit (4b) zum wiederholten Übertragen der Informationsanforderungen (10, 10a bis 10c) von der Hauptleitung (3) an die adressierten Überwachungseinheiten (DPM1 bis DPM3) während eines Übertragungszeitintervalls (T_{WU}), in welchem die mindestens eine adressierte Überwachungseinheit (DPM1 bis DPM3) aus einem Betriebsmodus mit niedriger Leistungsaufnahme (15) aufwachen soll,
und
eine Empfangseinheit (4c) zum Empfangen von Antwortsignalen (A, B, C), welche von den Überwachungseinheiten (DPM1 bis DPM3) an die Vermittlungsstelle (4) zurückübertragen werden, wobei
die Erzeugungseinheit (4c) für das Erzeugen der Zeitverzögerungsinformation (12) für unterschiedliche adressierte Überwachungseinheiten (DPM1 bis DPM3) ausgelegt ist, so dass sich die Empfangszeiten (R1 bis R3) der Antwortsignale (A, B, C) in der Vermittlungsstelle (4) voneinander unterscheiden, wobei das Erzeugen vorzugsweise Laufzeitverzögerungen der Informationsanforderungen (10, 10a bis 10c) und der Antwortsignale (A,B, C) berücksichtigt.

10. Vermittlungsstelle (4) nach Anspruch 9, wobei die Erzeugungseinheit (4a) für das Erzeugen der Zeitverzögerungsinformation (12) für die adressierten Überwachungseinheiten (DPM1 bis DPM3) ausgelegt ist, so dass die Empfangszeiten (R1 bis R3) der Antwortsignale (A, B, C) von unterschiedlichen Überwachungseinheiten (DPM1 bis DPM3) an der Hauptleitung (3) in einem gemeinsamen Detektionszeitintervall (T_{D}) begriffen sind, vorzugsweise alternierend mit einem Übertragungszeitintervall (T_{WU}) für die Übertragung der mindestens einen Informationsanforderung (10, 10a bis 10c).

11. Vermittlungsstelle (4) nach Anspruch 10, wobei die Übertragungseinheit (4b) dazu ausgelegt ist, während eines gegebenen Übertragungszeitintervalls (T_{WU}) nur Informationsanforderungen (10a bis 10c), welche spezifische Übertragungseinheiten (DPM1 bis DPM3) adressieren, zu übertragen, wobei die Übertragungen vorzugsweise periodisch erfolgen.

12. Vermittlungsstelle (4) nach Anspruch 10, wobei das Erzeugen der Informationsanforderung (10) das Erzeugen von Adressinformationen (11) für die Adressierung von mindestens zwei, vorzugsweise aller Überwachungseinheiten (DPM1 bis DPM3) umfasst.

13. Vermittlungsstelle (4) nach einem beliebigen der Ansprüche 10 bis 12, wobei das Erzeugen der Informationsanforderung (10, 10a, 10c) das Erzeugen von Befehlsinformationen (13) zum Auswählen eines Typs der in den Antwortsignalen (A, B, C) zu übertragenden Uplink-Informationen umfasst.

14. Passives optisches Netzwerk (1), umfassend:
Mindestens eine Überwachungseinheit (DPM1 bis DPM3) gemäß einem beliebigen der Ansprüche 7 oder 8, und
Eine Vermittlungsstelle (4) gemäß einem beliebigen der Ansprüche 9 bis 13.

15. Passives optisches Netzwerk (1) nach Anspruch 14, wobei das passive optische Netzwerk (1) ein Betreibernetzwerk (2) umfasst und die mindestens eine Überwachungseinheit (DPM1 bis DPM3) in dem Betreibernetzwerk (2) angrenzend an einen Abgrenzungspunkt (9.1 bis 9.3) zu einem Benutzernetzwerk (7) angeordnet ist.

## Revendications

1. Procédé de surveillance d'un réseau optique passif (1) présentant une structure arborescente avec une ligne principale (3) et une pluralité de branches (6.1 à 6.3), une pluralité d'unités de surveillance (DPM1 à DPM3) étant disposée dans la pluralité de branches (6.1 à 6.3), le procédé comprenant les étapes suivantes :
générer au moins une demande d'informations (10, 10a à 10c) comprenant des informations d'adresse (11) pour adresser une unité de surveillance (DPM1 à DPM3) et des informations de retard temporel (12) pour l'unité de surveillance (DPM1 à DPM3) adressée,
transmettre de manière répétée l'au moins une demande d'information (10) à partir de la ligne principale (3) vers l'au moins une unité de surveillance (DPM1 à DPM3) adressée durant un intervalle de temps de transmission (T_{WU}) dans lequel l'au moins une unité de surveillance (DPM1 à DPM3) est supposée sortir d'un mode de fonctionnement à faible puissance (15),
détecter la demande d'informations (10, 10a à 10c) dans l'unité de surveillance (DPM1 à DPM3) adressée durant un intervalle de temps d'écoute (T_{L}) dans lequel l'unité de surveillance (DPM1 à DPM3) adressée est en mode de fonctionnement à puissance plus élevée (Rx on), l'intervalle de temps d'écoute (T_{L}) faisant partie de l'intervalle de temps de transmission (T_{WU}), et renvoyant un signal de réponse (A, B, C) à la ligne principal (3) après un temps de retard (Δt_{A} à Δt_{C}) qui est défini dans les informations de retard temporel (12) de la demande d'informations (10, 10a à 10c),
dans lequel pendant au moins une partie du temps de retard (Δt_{A} à Δt_{C}), l'unité de surveillance (DPM1 à DPM3) adressée fonctionne en mode de fonctionnement à faible puissance (25).

2. Procédé selon la revendication 1, comprenant en outre l'étape suivante :
générer les informations de retard temporel (12) pour des unités de surveillance (DPM1 à DPM3) adressées différentes de sorte que des temps de réception (R1 à R3) des signaux de réponse (A, B, C) au niveau de la ligne principale (3) soient différents les uns des autres, la génération des informations de retard temporel (12) prenant en compte de préférence des retards de propagation des demandes d'informations (10, 10a à 10c) et des signaux de réponse (A, B, C).

3. Procédé selon la revendication 1 ou 2, comprenant en outre l'étape suivante : générer les informations de retard temporel (12) pour les unités de surveillance (DPM1 à DPM3) adressées de sorte que les temps de réception (R1 à R3) des signaux de réponse (A, B, C) d'unités de surveillance (DPM1 à DPM3) différentes au niveau de la ligne principale (3) soient contenus dans un intervalle de temps de détection commun (T_{D}), alternant de préférence avec un intervalle de temps de transmission (T_{WU}) pour transmettre l'au moins une demande d'informations (10, 10a à 10c).

4. Procédé selon la revendication 3, dans lequel durant un intervalle de temps de transmission (T_{WU}) donné, seules des demandes d'informations (10a à 10c) adressant des unités de surveillance (DPM1 à DPM3) spécifiques sont transmises, de préférence de manière périodique.

5. Procédé selon l'une quelconque des revendications précédentes, dans lequel la génération de la demande d'informations (10) comprend la génération d'informations d'adresse (12) pour adresser au moins deux unités de surveillance mais de préférence toutes les unités de surveillance (DPM1 à DPM3).

6. Procédé selon l'une quelconque des revendications précédentes, dans lequel la génération de la demande d'informations (10, 10a à 10c) comprend la génération d'informations de commande (13) pour sélectionner un type d'informations de liaison montante à transmettre dans les signaux de réponse (A, B, C).

7. Unité de surveillance (DPM1) pour un réseau optique passif présentant une structure arborescente avec une ligne principale (3) et une pluralité de branches (6.1 à 6.3), l'unité de surveillance (DPM1) comprenant :
une unité de détection (Rx) pour détecter une demande d'informations (10a) transmise de manière répétée durant un intervalle de temps de transmission (T_{WU}) dans lequel l'unité de surveillance (DPM1 à DPM3) est supposée sortir d'un mode de fonctionnement à faible puissance (15), la demande d'informations (10a) étant adressée à l'unité de surveillance (DPM1) et comprenant des informations de retard temporel (12),
une unité de transmission (Tx) pour transmettre un signal de réponse (A) à la ligne principale (3) après un temps de retard (Δt_{A}) qui est défini dans les informations de retard temporel (12) de la demande d'informations (10a),
l'unité de surveillance (DPM1) étant adaptée pour fonctionner en mode de fonctionnement à faible puissance (25) pendant au moins une partie du temps de retard (Δt_{A}), l'unité de surveillance (DPM1) comprenant en outre une horloge interne de faible qualité adaptée pour sortir l'unité de surveillance (DPM1) d'un mode de fonctionnement à faible puissance (15) pendant un intervalle de temps d'écoute (T_{L}), l'intervalle de temps d'écoute (T_{L}) faisant partie de l'intervalle de temps de transmission (T_{WU}).

8. Unité de surveillance selon la revendication 7, comprenant en outre une unité de commutation de mode (16, 17) pour passer du mode de fonctionnement à faible puissance (15, 25) à un mode de fonctionnement à puissance plus élevée (Rx on, Tx on) pour détecter la demande d'informations (10 ; 10a à 10c) et/ou pour transmettre le signal de réponse (A).

9. Central (4) pour un réseau optique passif (1) présentant une structure arborescente avec une ligne principale (3) et au moins deux branches (6.1 à 6.3), une pluralité d'unités de surveillance (DPM1 à DPM3) étant disposée dans au moins deux des branches (6.1 à 6.3),
le central (4) comprenant :
une unité de génération (4a) pour générer des demandes d'informations (10, 10a à 10c) comprenant des informations d'adresse (11) pour adresser les unités de surveillance (DPM1 à DPM3) et des informations de retard temporel (12) pour les unités de surveillance (DPM1 à DPM3) adressées,
une unité de transmission (4b) pour transmettre de manière répétée les demandes d'informations (10, 10a à 10c) à partir de la ligne principale (3) vers les unités de surveillance (DPM1 à DPM3) adressées durant un intervalle de temps de transmission (T_{WU}) dans lequel l'au moins une unité de surveillance (DPM1 à DPM3) adressée est supposée sortir d'un mode de fonctionnement à faible puissance (15), et
une unité de réception (4c) pour recevoir des signaux de réponse (A, B, C) renvoyés au central (4) à partir des unités de surveillance (DPM1 à DPM3), dans lequel
l'unité de génération (4a) est adaptée pour générer les informations de retard temporel (12) pour des unités de surveillance (DPM1 à DPM3) adressées différentes de sorte que des temps de réception (R1 à R3) des signaux de réponse (A, B, C) dans le central (4) soient différents les uns des autres, la génération prenant en compte de préférence des retards de propagation des demandes d'informations (10, 10a à 10c) et des signaux de réponse (A, B, C).

10. Central (4) selon la revendication 9, dans lequel l'unité de génération (4a) est adaptée pour générer les informations de retard temporel (12) pour les unités de surveillance (DPM1 à DPM3) adressées de sorte que les temps de réception (R1 à R3) des signaux de réponse (A, B, C) d'unités de surveillance (DPM1 à DPM3) différentes au niveau de la ligne principale (3) soient contenus dans un intervalle de temps de détection commun (T_{D}), alternant de préférence avec un intervalle de temps de transmission (T_{WU}) pour transmettre l'au moins une demande d'informations (10, 10a à 10c).

11. Central (4) selon la revendication 10, dans lequel l'unité de transmission (4b) est adaptée pour transmettre durant un intervalle de temps de transmission (T_{WU}) donné uniquement des demandes d'informations (10a à 10c) adressant des unités de surveillance (DPM1 à DPM3) spécifiques, les transmissions étant de préférence effectuées de manière périodique.

12. Central (4) selon la revendication 10, dans lequel la génération de la demande d'informations (10) comprend la génération d'informations d'adresse (11) pour adresser au moins deux unités de surveillance mais de préférence toutes les unités de surveillance (DPM1 à DPM3).

13. Central (4) selon l'une quelconque des revendications 10 à 12, dans lequel la génération de la demande d'informations (10, 10a à 10c) comprend la génération d'informations de commande (13) pour sélectionner un type d'informations de liaison montante à transmettre dans les signaux de réponse (A, B, C).

14. Réseau optique passif (1), comprenant :
au moins une unité de surveillance (DPM1 à DPM3) selon l'une quelconque des revendications 7 et 8, et
un central (4) selon l'une quelconque des revendications 9 à 13.

15. Réseau optique passif (1) selon la revendication 14, dans lequel le réseau optique passif (1) comprend un réseau d'opérateur (2) et l'au moins une unité de surveillance (DPM1 à DPM3) est disposée dans le réseau d'opérateur (2) à côté d'un point de démarcation (9.1 à 9.3) vers un réseau d'utilisateur (7).
